# EUROPÄISCHE PATENTSCHRIFT

(11) **EP 1 717 141 B1**
(45) Veröffentlichungstag und Bekanntmachung des Hinweises auf die Patenterteilung: **30.05.2012**
(21) Anmeldenummer: 06005690.0
(22) Anmeldetag: 21.03.2006
(51) Int. Cl.: B63G 8/00, B63G 8/08

(54) **Unterseeboot mit einer Brennstoffanlage**
Submarine with fuel cells
Sous-marin avec piles à combustible

(30) Priorität: 27.04.2005 DE 102005019484
(43) Veröffentlichungstag der Anmeldung: 02.11.2006
(73) Patentinhaber: Howaldtswerke-Deutsche Werft GmbH, 24143 Kiel (DE)
(72) Erfinder: Pommer, Hans, 24360 Barkelsby (DE)
(74) Vertreter: Hemmer, Arnd

(56) Entgegenhaltungen:
- GB-A- 2 250 130
- MART PETER L ET AL: "FUEL CELL AIR INDEPENDENT PROPULSION OF SUBMARINES - (REPORT DSTO-GD-0042)", INTERNET CITATION, Juli 1995 (1995-07), Seite 54PP, XP007908715, Gefunden im Internet: URL:http://www.dtic.mil/cgi-bin/GetTRDoc?A D=ADA304112&Location=U2&doc=Get TRDoc.pdf [gefunden am 2009-06-02]

## Beschreibung

Die Erfindung betrifft ein Unterseeboot mit einer Brennstoffzellenanlage.

Es sind Unterseeboote bekannt, welche für einen außenluftunabhängigen Antrieb zur Energieversorgung eine Brennstoffzellenanlage aufweisen, welche elektrische Energie zum Antrieb des Unterseebootes und für die übrigen Aggregate des Unterseebootes bei getauchter Fahrt bereitstellt. Derartige Brennstoffzellenanlagen sind üblicherweise zusätzlich zu einem konventionellen dieselelektrischen Antrieb vorgesehen, welcher zusätzlich Batterien, insbesondere Bleibatterien zur Speicherung elektrischer Energie für den außenluftunabhängigen Antrieb des Unterseebootes aufweist.

Die bekannten Brennstoffzellenanlagen in Unterseebooten werden mit Wasserstoff und Sauerstoff betrieben. Dabei entsteht in der Brennstoffzelle Wasser, welches an der Kathodenseite der Brennstoffzelle austritt. Zusätzlich tritt an der Kathodenseite überschüssiger Sauerstoff aus. An der Anodenseite der Brennstoffzellen tritt nur wenig Wasser und überschüssiger Wasserstoff zusammen mit geringen Mengen von Fremdgasen aus, welche in der Brennstoffzelle nicht mit dem Sauerstoff reagieren.

Das Austreten von Wasserstoff im Unterseeboot ist aufgrund des abgeschlossenen Raumes des Unterseebootes und einer daraus resultierenden Explosionsgefahr problematisch. Daher muss der Wasserstoff aufgefangen werden und wird üblicherweise über einen katalytischen Rekombinator unter Zuführung von Luft bzw. Sauerstoff in Wasser umgewandelt. Ein solches Unterseeboot ist aus der GB 2 250 130 A bekannt. Nachteilig bei dieser Technik ist, dass der Rekombinator zusätzlichen Raum, welcher im Unterseeboot üblicherweise sehr knapp bemessen ist, beansprucht und darüber hinaus relativ schwer ist, da er als druckfester Behälter explosionsfest ausgebildet werden muss.

Es ist daher Aufgabe der Erfindung ein Unterseeboot mit einer Brennstoffzellenanlage bereitzustellen, welches ein verbessertes Restgassystem zum Auffangen bzw. Ableiten der von einer der Brennstoffzellenanlage abgegebenen Abgase aufweist, welches weniger Platz und Gewicht im Unterseeboot beansprucht.

Diese Aufgabe wird durch ein Unterseeboot mit den im Anspruch 1 angegebenen Merkmalen gelöst. Bevorzugte Ausführungsformen ergeben sich aus den Unteransprüchen.

Das erfindungsgemäße Unterseeboot weist eine Brennstoffzellenanlage sowie eine in einem Batterieraum angeordnete Batterieanlage, insbesondere mit Bleibatterien, auf. Der Batterieraum ist mit einem Lüftungssystem versehen, um von den Batterien freigesetzte Gase, bei den üblicherweise eingesetzten Bleibatterien ist dies auch Wasserstoff, gezielt aus dem Batterieraum ableiten zu können. Erfindungsgemäß wird nun eine derartige Verbindung zwischen der Brennstoffzellenanlage und dem Lüftungssystem des Batterieraumes geschaffen, dass von der Brennstoffzellenanlage freigesetzte Gase, insbesondere Wasserstoff, welcher an der Anode frei wird, ebenfalls in das Lüftungssystem des Batterieraumes abgeleitet bzw. über dieses behandelt werden. Diese Anordnung ermöglicht es, auf einen zusätzlichen Rekombinator zur Unschädlichmachung des von der Brennstoffzelle freigesetzten Wasserstoffes zu verzichten. Vielmehr wird ein ohnehin für den Batterieraum erforderliches Lüftungssystem nun zusätzlich dazu genutzt, auch die von der Brennstoffzelle freigesetzten Abgase abzuführen. Dazu ist die eigentliche Brennstoffzelle bzw. die Anodenseite entsprechend gekapselt, um die freiwerdenden Gase, insbesondere Wasserstoff, aufzufangen und über Leitungen dem Lüftungssystem des Batterieraumes zuzuführen. Da dieses Lüftungssystem bei der Verwendung von Bleibatterien ebenfalls zur Ableitung von Wasserstoff ausgebildet ist, kann dieses System problemlos auch den von der Brennstoffzellenanlage freigesetzten Wasserstoff auffangen und ableiten bzw. unschädlich machen.

Vorzugsweise ist die Brennstoffzellenanlage über eine Restgasleitung mit dem Batterieraum des Unterseebootes verbunden, um das von der Brennstoffzellenanlage freigesetzte Gas in den Batterieraum zu leiten. Vom Batterieraum aus wird das von der Brennstoffzelle freigesetzte Gas wie auch die von den Batterien freigesetzten Gase über das Lüftungssystem des Batterieraumes abgeleitet. So wird ein Restgassystem für die Restgase der Brennstoffquelle geschaffen, welches mit dem Lüftungssystem des Batterieraumes zu einem System verbunden ist. Der Batterieraum weist dabei vorzugsweise auch eine Belüftung bzw. einen Lufteintritt auf, durch den aus dem Inneren des Unterseebootes Luft in den Batterieraum zugeführt wird, welche die Luft bzw. Gase, welche von dem Lüftungssystem abgeleitet bzw. abgesaugt werden, ersetzt. Die Ableitung der von der Brennstoffzellenanlage freigesetzten Gase in den Batterieraum ermöglicht eine besonders einfache Ausgestaltung des gesamten Restgassystems, da die Zahl der erforderlichen Komponenten minimiert wird. Darüber hinaus kann ein einfacher Explosionsschutz gewährleistet werden, da durch die Luftzufuhr in den Batterieraum sowohl der von der Brennstoffzellenanlage als der auch von den Batterien freigesetzte Wasserstoff unter die Explosionsgrenze verdünnt werden kann. So kann sichergestellt werden, dass das Wasserstoff-Luft-Gemisch, welches von der dem Lüftungssystem des Batterieraumes abgeführt werden muss, nicht mehr explosiv ist. Auf diese Weise kann darauf verzichtet werden, das gesamte Restgassystem explosionsgeschützt auszubilden, wodurch für das Restgassystem Raum und Gewicht im Unterseeboot gespart werden können. Der Batterieraum ist vorzugsweise wie bei bekannten Anordnungen explosionsgeschützt ausgebildet, da bei der Verdünnung des Wasserstoffs mit Luft zunächst ein explosives Gemisch entsteht, bevor das Gemisch durch zugeführte Luft oder zugeführten Sauerstoff in den Batterieraum soweit verdünnt wird, dass die Explosionsgrenze unterschritten wird und eine Explosion ausgeschlossen ist. Die Ableitung des von der Brennstoffzellenanlage freigesetzten Wasserstoffes in den Batterieraum hat dabei den Vorteil, dass neben dem ohnehin wegen der Freisetzung von Wasserstoff aus den Batterien explosionsgeschützt ausgebildeten Batterieraum keine weiteren Anlagenteile explosionsgeschützt ausgebildet werden müssen, wie es früher bei einem Rekombinator zur Abfuhr des von der Brennstoffzelle freigesetzten Wasserstoffes erforderlich war.

In der Restgasleitung zwischen der Brennstoffzellenanlage und dem Batterieraum ist vorzugsweise ein Wasserabscheider angeordnet, welcher das in dem von der Brennstoffzellenanlage, insbesondere an deren Anodenseite freigesetzten Gas das enthaltende Wasser abscheidet, so dass dem Restgassystem oder dem Batterieraum nur gasförmige Komponenten, insbesondere reiner Wasserstoff zugeführt wird.

Weiter bevorzugt ist der Wasserabscheider mit einem Wassertank zur Aufnahme des abgeschiedenen Wassers verbunden. Das dort gesammelte Wasser kann dann in bestimmten Zeitabständen abgelassen bzw. abgepumpt werden.

Bevorzugt ist in einer Leitungsverbindung zwischen dem Wasserabscheider und dem Wassertank eine Gassperre angeordnet, welche verhindert, dass Gas, insbesondere Wasserstoff aus dem Wasserabscheider in den Wassertank eintritt.

Eine solche Gassperre kann beispielsweise als U-Rohr ausgebildet sein, welches in der Leitungsverbindung zwischen Wasserabscheider und Wassertank angeordnet ist. Dieses U-Rohr bewirkt, dass ein Abschnitt der Leitung ständig mit Wasser gefüllt ist, so dass kein Gas durch die Leitung durchtreten kann. Die Gassperre kann auch in anderer Weise beispielsweise nach Art eines Siphons ausgebildet werden.

Weiter bevorzugt ist der Wassertank mit einer Entlüftungsleitung versehen, welche mit dem Batterieraum in Verbindung steht. So kann für den Fehlerfall, in dem doch einmal Gas, insbesondere Wasserstoff in den Wassertank eingetreten ist, diese in den Batterieraum abgeleitet werden und von dort aus wie vorangehend beschrieben über das Lüftungssystem des Batterieraumes abgeführt werden.

Darüber hinaus ist der Wassertank vorzugsweise stickstoffgepuffert ausgebildet, um ein Eintreten von Wasserstoff zu verhindern.

In dem Lüftungssystem des Batterieraums ist zweckmäßigerweise ein Rekombinator zur Umwandlung von Wasserstoff in Wasser angeordnet. Ein solcher Rekombinator bildet einen Katalysator, in welchem der Wasserstoff mit Sauerstoff, welcher in den Batterieraum als Luft oder in Form von reinem Sauerstoff zugeführt wird, in einem exothermen Prozess zu Wasser verbrennt. Der Rekombinator kann dazu in bekannter Weise aus Rekombinator-Matten ausgebildet sein, wie es von bereits existierenden Batterieraumentlüftungssystemen bekannt ist. Die Gasumwälzung im Lüftungssystem des Batterieraumes erfolgt vorzugsweise mittels der Bootslüftung, indem dem Batterieraum über die Lüftung Luft zugeführt wird, so dass das Gas im Batterieraum dann weiter in das Lüftungssystem strömt und von dort wieder dem Luftkreislauf im Boot zugeführt wird, wobei der Wasserstoff, welcher im Batterieraum vorhanden ist, durch den beschriebenen Rekombinator zu Wasser bzw. Wasserdampf verbrannt werden kann.

Zur Abscheidung des Wassers bzw. Wasserdampfes kann in dem Lüftungssystem des Batterieraumes an geeigneter Stelle ein Wasserabscheider vorgesehen sein.

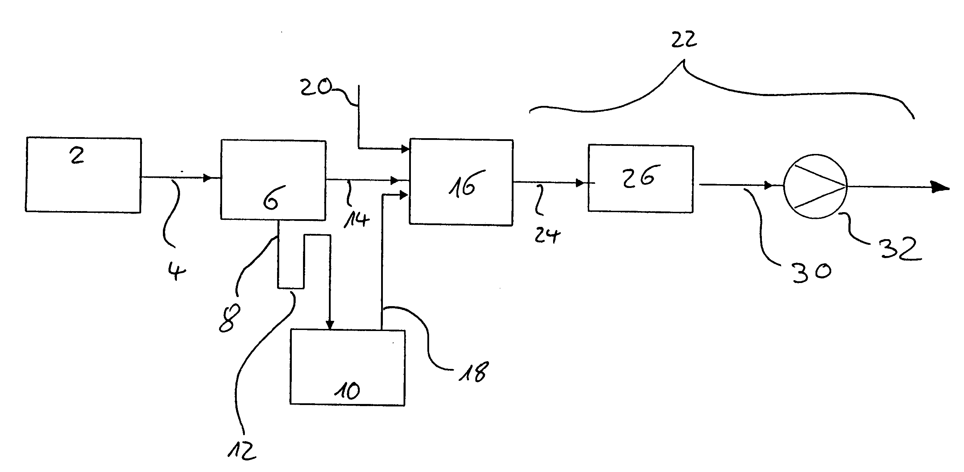

Nachfolgend wird die Erfindung beispielhaft anhand der beigefügten Figur beschrieben, welche schematisch den Aufbau der Brennstoffzellenanlage bzw. des Restgassystems der Brennstoffzellenanlage im Zusammenhang mit der Entlüftung des Batterieraumes zeigt.

Der von der Brennstoffzelle an der Anodenseite freigesetzte Wasserstoff wird von einer Kapselung der Brennstoffzelle aufgefangen und über eine Restgasleitung 4 zunächst einem Wasserabscheider 6 zugeführt. Diese Brennstoffzellenanlage 2 weist vorzugsweise einen derartigen Aufbau auf, dass die Sauerstoff- und die Wasserstoffseite der Brennstoffzelle streng voneinander getrennt sind, so dass der freigesetzte Wasserstoff an der Anodenseite der Brennstoffzelle getrennt als reiner Wasserstoff aufgefangen werden kann und durch die Restgasleitung 4 abgeleitet werden kann. So besteht in diesem Bereich, da der Wasserstoff nicht mit Sauerstoff in Kontakt kommt, keinerlei Explosionsgefahr. Das in der Restgasleitung 4 abgeführte Gas kann lediglich zusätzlich geringe Mengen von Wasser enthalten, welche neben dem Wasserstoff an der Anodenseite der Brennstoffzelle freigesetzt werden. Dieses Wasser wird in dem Wasserabscheider 6 abgeschieden und über eine Leitung 8 in einen Wassertank 10 geleitet.

Dabei weist die Leitung 8 einen als U-Rohr ausgebildeten Abschnitt auf, in welchem sich Wasser sammelt, so dass die Leitung 8 im Bereich des U-Rohres 12 vollständig mit Wasser gefüllt ist, so dass verhindert wird, dass gasförmiger Wasserstoff von dem Wasserabscheider 6 in den Wassertank 10 gelangen kann.

Der nun vom Wasser getrennte Wasserstoff wird von dem Wasserabscheider 6 über eine weitere Leitung 14 in den Batterieraum 16 geleitet, in welchem die Bleibatterien des Unterseebootes angeordnet sind. Der Batterieraum 16 ist gekapselt und explosionsgeschützt ausgebildet, da die Bleibatterien ebenfalls Wasserstoff freisetzten. Für den Fall, dass doch einmal Gas in den Wassertank 10 gelangen sollte, ist dieser mit einer Entlüftungsleitung 18 versehen, welche ebenfalls in den Batterieraum 16 führt, so dass Gas, insbesondere Wasserstoff aus dem Wassertank 10 ebenfalls in den Batterieraum 16 geleitet werden kann.

In dem Batterieraum 16 sammelt sich somit zum einen der von der Brennstoffzellenanlage 2 abgegebene Wasserstoff, welcher über die Leitung 14 und ggf. über die Leitung 18 zugeführt wird, und zum anderen der Wasserstoff, welcher von den Batterien freigesetzt wird. Über die Bootslüftung wird über eine Leitung bzw. einen Einlass 20 Luft und damit Sauerstoff in den Batterieraum 16 geleitet, wodurch in dem Batterieraum 16 eine Verdünnung des Wasserstoffgases stattfindet, so dass dort ein Wasserstoff-Luft-Gemisch gebildet wird. Dabei wird soviel Luft zugeführt, dass die Wasserstoffkonzentration in der Luft unter die Explosionsgrenze sinkt. Da dabei der Bereich eines explosiven Gemisches bei der Mischung durchschritten werden muss, ist der Batterieraum 16 explosionsgeschützt ausgebildet.

Aus dem Batterieraum 16 wird das dort entstandene Wasserstoff-Luft-Gemisch in ein Lüftungs- bzw. Entlüftungssystem 22 geführt. Dies erfolgt durch eine Leitung 24, welche das Wasserstoff-Luft-Gemisch von dem Batterieraum 16 in einen Rekombinator 26 leitet, welcher einen Katalysator bildet, in dem der Wasserstoff mit dem Sauerstoff der Luft zu Wasser bzw. Wasserdampf reagiert. Die Luft wird aus dem Rekombinator 26 über eine Leitung 30 abgeleitet und wieder der Bootslüftung zugeführt. Um die Luftströmung von der Eingangsleitung 20 durch den Batterieraum 16, die Leitung 24 und den Rekombinator 26 sowie die Leitung 30 aufrechtzuerhalten, ist in der Leitung 30 ein Lüfter 32 vorgesehen, welcher jedoch alternativ auch an anderer Stelle im Luftkreislauf angeordnet werden könnte, z.B. im Einlass 20.

### Bezugszeichenliste

- 2 -: Brennstoffzellenanlage
- 4 -: Restgasleitung
- 6 -: Wasserabscheider
- 8 -: Leitung
- 10 -: Wassertank
- 12 -: U-Rohr
- 14 -: Leitung
- 16 -: Batterieraum
- 18 -: Entlüftungsleitung
- 20 -: Eingangsleitung
- 22 -: Lüftungssystem
- 24 -: Leitung
- 26 -: Rekombinator
- 30 -: Leitung
- 32 -: Lüfter

## Patentansprüche

1. Unterseeboot mit einer Brennstoffzellenanlage (2) und einer in einem Batterieraum (16) angeordneten Batterieanlage, wobei der Batterieraum (16) mit einem Lüftungssystem (22) versehen ist und die Brennstoffzellenanlage (2) derart mit dem Lüftungssystem (22) des Batterieraumes (16) in Verbindung steht, dass von der Brennstoffzellenanlage (2) freigesetzte Gase über das Lüftungssystem (22) des Batterieraumes (16) abgeleitet werden.

2. Unterseeboot nach Anspruch 1, **dadurch gekennzeichnet, dass** die Brennstoffzelleanlage (2) über eine Restgasleitung (4, 14) mit dem Batterieraum (16) des Unterseebootes verbunden ist, um von der Brennstoffzellenanlage (2) freigesetztes Gas in den Batterieraum (16) zu leiten.

3. Unterseeboot nach Anspruch 1 oder 2, bei welchem in der Restgasleitung (4, 14) zwischen der Brennstoffzellenanlage (2) und dem Batterieraum (16) ein Wasserabscheider (6) angeordnet ist.

4. Unterseeboot nach Anspruch 3, bei welchem der Wasserabscheider (6) mit einem Wassertank (10) zur Aufnahme des abgeschiedenen Wassers verbunden ist.

5. Unterseeboot nach Anspruch 4, bei welchem in einer Leitungsverbindung (8) zwischen dem Wasserabscheider (6) und dem Wassertank (10) eine Gassperre (12) angeordnet ist.

6. Unterseeboot nach Anspruch 5, bei welchem die Leitungsverbindung (8) zwischen Wasserabscheider (6) und Wassertank (10) ein U-Rohr (12) aufweist.

7. Unterseeboot nach einem der Ansprüche 4 bis 6, bei welchem der Wassertank (10) mit einer Entlüftungsleitung (18) versehen ist, welche mit dem Batterieraum (16) in Verbindung steht.

8. Unterseeboot nach einem der Ansprüche 4 bis 7, bei welchem der Wassertank (10) stickstoffgepuffert ist.

9. Unterseeboot nach einem der vorangehenden Ansprüche, bei welchem in dem Lüftungssystem (22) des Batterieraumes (16) ein Rekombinator (26) zur Umwandlung von Wasserstoff in Wasser angeordnet ist.

10. Unterseeboot nach einem der vorangehenden Ansprüche, bei welchem in dem Lüftungssystem (22) des Batterieraumes (16) ein Wasserabscheider angeordnet ist.

## Claims

1. A submarine with a fuel cell installation (2) and with a battery installation arranged in a battery room (16), wherein the battery room (16) is provided with a ventilation system (22) and the fuel cell installation (2) is in connection with the ventilation system (22) of the battery room (16) in a manner such that gases released by the fuel cell installation (2) are led away via the ventilation system (22) of the battery room (16).

2. A submarine according to claim 1, **characterised in that** the fuel cell installation (2) is connected via a residual gas conduit (4, 14) to the battery room (16) of the submarine, in order to lead gas released by the fuel cell installation (2), into the battery room (16).

3. A submarine according to claim 1 or 2, with which a water separator (6) is arranged in the residual gas conduit (4, 14) between the fuel cell installation (2) and the battery room (16).

4. A submarine according to claim 3, with which the water separator (6) is connected to a water tank (10) for receiving the separated water.

5. A submarine according to claim 4, with which a gas block (12) is arranged in a conduit connection (8) between the water separator (6) and the water tank (10).

6. A submarine according to claim 5, with which the conduit connection (8) between the water separator (6) and the water tank (10) is a U-tube (12).

7. A submarine according to one of the claims 4 to 6, with which the water tank (10) is provide with a bleed conduit (18) which is in connection with the battery room (16).

8. A submarine according to one of the claims 4 to 7, with which the water tank (10) is nitrogen buffered.

9. A submarine according to one of the preceding claims, with which a recombinator (26) for converting hydrogen into water is arranged in the ventilation system (22) of the battery room (16).

10. A submarine according to one of the preceding claims, with which a water separator is arranged in the ventilation system (22) of the battery room (16).

## Revendications

1. Sous-marin équipé d'une unité de piles à combustible (2) et d'une unité de batteries agencée dans un compartiment des batteries (16), le compartiment des batteries (16) étant doté d'un système de ventilation (22) et l'unité de piles à combustible (2) étant en communication avec le système de ventilation (22) du compartiment des batteries (16) de telle sorte que les gaz dégagés par l'unité de piles à combustible (2) sont évacués au moyen du système de ventilation (22) du compartiment des batteries (16).

2. Sous-marin selon la revendication 1, **caractérisé en ce que** l'unité de piles à combustible (2) est reliée au compartiment des batteries (16) du sous-marin par une conduite de gaz résiduel (4, 14) pour envoyer dans le compartiment des batteries (16) le gaz dégagé par l'unité de piles à combustible (2).

3. Sous-marin selon la revendication 1 ou 2, dans lequel un séparateur d'eau (6) est monté dans la conduite de gaz résiduel (4, 14) entre l'unité de piles à combustible (2) et le compartiment des batteries (16).

4. Sous-marin selon la revendication 3, dans lequel le séparateur d'eau (6) est relié à une cuve à eau (10) prévue pour recevoir l'eau séparée.

5. Sous-marin selon la revendication 4, dans lequel un arrêt de gaz (12) est monté dans un joint de conduite (8) entre le séparateur d'eau (6) et la cuve à eau (10).

6. Sous-marin selon la revendication 5, dans lequel le joint de conduite (8) entre le séparateur d'eau (6) et la cuve à eau (10) présente un tube en U (12).

7. Sous-marin selon l'une des revendications 4 à 6, dans lequel la cuve à eau (10) est dotée d'une conduite de dégazage (18) qui est en liaison avec le compartiment des batteries (16).

8. Sous-marin selon l'une des revendications 4 à 7, dans lequel la cuve à eau (10) est sous atmosphère d'azote.

9. Sous-marin selon l'une des revendications précédentes, dans lequel un recombinateur (26) est prévu dans le système de ventilation (22) du compartiment des batteries (16) pour la conversion d'hydrogène en eau.

10. Sous-marin selon l'une des revendications précédentes, dans lequel un séparateur d'eau est prévu dans le système de ventilation (22) du compartiment des batteries (16).
